# EUROPEAN PATENT APPLICATION

(11) **EP 4 183 903 A1**
(43) Date of publication of application: **24.05.2023**
(21) Application number: 21846492.3
(22) Date of filing: 26.05.2021
(51) Int. Cl.: C25C 7/02, C25B 11/073

(54) **OXYGEN-GENERATING ELECTRODE**

(30) Priority: 20.07.2020 JP 2020123597
(71) Applicant: De Nora Permelec Ltd, Fujisawa-shi, Kanagawa 252-0816 (JP)
(72) Inventor: FURUSAWA, Takashi, Fujisawa-shi, Kanagawa 252-0816 (JP); MIYAKAWA, Eri, Fujisawa-shi, Kanagawa 252-0816 (JP)
(74) Representative: Blodig, Wolfgang
(86) International application number: PCT/JP2021/020007
(87) International publication number: WO 2022/018962

(57) **Abstract**

The present invention provides an oxygen generation electrode provided with a catalyst layer having a high specific electric conductivity, and having excellent durability such that even when an acidic electrolyte is electrolyzed, the catalyst components are unlikely to be consumed and long-term electrolysis can be performed. The oxygen generation electrode is an oxygen generation electrode 10 provided with a substrate 2 formed with titanium or a titanium alloy, and a catalyst layer 4 disposed on the substrate 2 and formed with a mixed metal oxide, wherein the catalyst layer 4 satisfies at least any one of the following condition (1) and condition (2). Condition (1): containing ruthenium, tin, and trivalent or higher polyvalent metal element excluding a tetravalent metal element. Condition (2): containing ruthenium and tin, and having a content of ruthenium of 40 mol% or more based on the total content of the ruthenium and tin.

## Description

### Technical Field

The present invention relates to an oxygen generation electrode.

### Background Art

In a process of electrowinning of a nonferrous metal, such as copper, nickel, or zinc, a sulfuric acid acidic or strongly acidic electrolyte is generally used. Then, as an anode which is a counter electrode, an oxygen generation electrode that causes an oxygen evolution reaction is used. A titanium electrode in which a coating layer containing a mixed metal oxide (MMO) is provided as a catalyst layer on the surface thereof has lower overpotential properties with regard to the oxygen evolution reaction, and therefore has been proposed as an anode for an electrowinning process that substitutes for a lead alloy electrode which has conventionally been used as an oxygen generation electrode and can reduce energy consumption.

The mixed metal oxide for forming a catalyst layer is usually a composite oxide of iridium (Ir) as an active element and a valve metal as a binder element, such as tantalum (Ta), tin (Sn), titanium (Ti), zirconium (Zr), or niobium (Nb). As an electrode using such a composite oxide, an oxygen generation titanium electrode provided with a catalyst layer containing IrO₂-Ta₂O₅ has been proposed (Non-Patent Literature 1). However, iridium is one of the most expensive and rarest elements, and therefore there has been a problem that iridium lacks versatility in terms of economic efficiency as a material for forming a catalyst layer of an anode for an electrowinning process.

On the other hand, it is known that an oxide (RuO₂) of ruthenium (Ru), which is cheaper than iridium, exhibits high electrode catalytic activity to the oxygen evolution reaction (OER), and therefore the oxide of ruthenium has been attracting attention as a substitute for iridium. For example, a titanium electrode provided with a catalyst layer containing RuO₂-Ta₂O₅, which is a composite oxide without using iridium, has been proposed (Non-Patent Literature 2).

### Citation List

### Non-Patent Literature

Non-Patent Literature 1: Journal of Applied Electrochemistry, 1991, 21, p.335-345
Non-Patent Literature 2: Proceedings of Copper 2016 (Abstracts), p.2145-2152

### Summary of Invention

### Technical Problem

However, there has been a problem that when ruthenium is used as an active element that forms a catalyst layer of an oxygen generation titanium electrode, the durability of the catalyst layer is lowered. Therefore, in an oxygen generation electrode provided with a catalyst layer containing ruthenium as an active element, there has been a problem that it is difficult to apply the oxygen generation electrode to long-term electrolysis over, for example, a plurality of years.

The present invention has been completed in view of such a problem of the conventional techniques, and an object of the present invention is to provide an oxygen generation electrode provided with a catalyst layer having a high specific electric conductivity, and having excellent durability such that even when an acidic electrolyte is electrolyzed, the catalyst components are unlikely to be consumed and long-term electrolysis can be performed.

### Solution to Problem

That is, according to the present invention, an oxygen generation electrode described below is provided.
[1] An oxygen generation electrode provided with: a substrate formed with titanium or a titanium alloy; and a catalyst layer disposed on the substrate and formed with a mixed metal oxide, wherein the catalyst layer satisfies at least any one of the following condition (1) and condition (2) :
   condition (1): containing ruthenium, tin, and a trivalent or higher polyvalent metal element excluding a tetravalent metal element; and
   condition (2): containing ruthenium and tin, and having a content of ruthenium of 40 mol% or more based on a total content of ruthenium and tin.
[2] The oxygen generation electrode according to [1], wherein the catalyst layer satisfies the condition (1), and a content of the polyvalent metal element in the catalyst layer is 2 to 20 mol% based on a total content of metal elements in the catalyst layer.
[3] The oxygen generation electrode according to [1] or [2], wherein the polyvalent metal element is at least one selected from the group consisting of bismuth, tantalum, lanthanum, niobium, and molybdenum.
[4] The oxygen generation electrode according to any one of [1] to [3], wherein the catalyst layer satisfies the condition (1), and a content of ruthenium in the catalyst layer is 20 to 70 mol% based on a total content of metal elements in the catalyst layer.
[5] The oxygen generation electrode according to any one of [1] to [4], wherein the catalyst layer further contains manganese.
[6] The oxygen generation electrode according to any one of [1] to [5], further provided with an intermediate layer disposed between the substrate and the catalyst layer.
[7] The oxygen generation electrode according to any one of [1] to [6], further provided with a barrier layer disposed on the catalyst layer.
[8] The oxygen generation electrode according to any one of [1] to [7], to be used as an anode for an electrowinning process for a nonferrous metal.

### Advantageous Effects of Invention

The present invention can provide an oxygen generation electrode provided with a catalyst layer having a high specific electric conductivity, and having excellent durability such that even when an acidic electrolyte is electrolyzed, the catalyst components are unlikely to be consumed and long-term electrolysis can be performed.

### Brief Description of Drawings

[Figure 1] Figure 1 is a schematic diagram showing one embodiment of an oxygen generation electrode of the present invention.
[Figure 2] Figure 2 is a schematic diagram showing another embodiment of an oxygen generation electrode of the present invention.
[Figure 3] Figure 3 is a schematic diagram showing yet another embodiment of an oxygen generation electrode of the present invention.
[Figure 4] Figure 4 is a schematic diagram showing still yet another example of an oxygen generation electrode of the present invention.

### Description of Embodiments

Hereinafter, embodiments of the present invention will be described, but the present invention is not limited to the following embodiments. An oxygen generation electrode of the present invention is provided with a substrate formed with titanium or a titanium alloy, and a catalyst layer disposed on this substrate and formed with a mixed metal oxide. Then, this catalyst layer satisfies at least any one of the following condition (1) and condition (2). Hereinafter, details on the oxygen generation electrode of the present invention will be described.

Condition (1): containing ruthenium, tin, and a trivalent or higher polyvalent metal element excluding a tetravalent metal element.

Condition (2): containing ruthenium and tin, and having a content of ruthenium of 40 mol% or more based on the total content of ruthenium and tin.

### (Substrate)

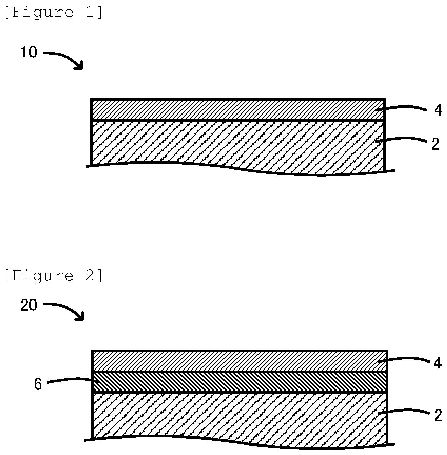

Figure 1 is a schematic diagram showing one embodiment of the oxygen generation electrode of the present invention. As shown in Figure 1, an oxygen generation electrode 10 of the present embodiment is provided with a substrate 2 and a catalyst layer 4 disposed on the substrate 2. The substrate 2 is formed with titanium or a titanium alloy. The overall shape of the substrate 2 is not particularly limited and can appropriately be designed according to the application. Examples of the overall shape of the substrate include a plate-like shape, a rod-like (columnar) shape, and a mesh-like shape.

### (Catalyst Layer)

The catalyst layer 4 which is disposed on the substrate 2 is formed with a mixed metal oxide (Figure 1). This mixed metal oxide is a composite oxide of a plurality of metal elements and functions as an electrolysis catalyst. Then, the catalyst layer is a layer satisfying at least any one of the following condition (1) and condition (2), and is preferably a layer satisfying both of the following condition (1) and condition (2).

Condition (1): containing ruthenium, tin, and a trivalent or higher polyvalent metal element excluding a tetravalent metal element.

Condition (2): containing ruthenium and tin, and having a content of ruthenium of 40 mol% or more based on the total content of ruthenium and tin.

The thickness of the catalyst layer is not particularly limited and can arbitrarily be set. The thickness of the catalyst layer may be set to, for example, 1 to 10 µm.

### [Condition (1)]

The catalyst layer contains ruthenium (Ru), tin (Sn), and a trivalent or higher (excluding a tetravalent) polyvalent metal element (hereinafter, also simply referred to as "polyvalent metal element"). That is, the catalyst layer is formed with a mixed metal oxide which is a composite oxide of ruthenium as an active element, tin as a binder element, and the above-described polyvalent metal element. By allowing ruthenium and tin, which are tetravalent metal elements, and besides, the polyvalent metal element having a valence different from these tetravalent metal elements to co-exist in the catalyst layer, the specific electric conductivity can be enhanced and an oxygen generation electrode having a lower electrode potential can be made. In addition, by allowing the catalyst layer to contain the polyvalent metal element, the catalyst components (particularly, ruthenium which is an active element) are unlikely to be consumed and a catalyst layer having excellent durability can be made even when electrolysis is performed under an acidic condition, such as a sulfuric acid acidic condition. Not that the valence of a metal element, as used herein, means a valence (oxidation number) of the metal element that can be present in the most stable state.

Examples of the polyvalent metal element include bismuth (Bi), tantalum (Ta), lanthanum (La), niobium (Nb), and molybdenum (Mo) . Among these, the polyvalent metal element is preferably bismuth, tantalum, lanthanum, or niobium, more preferably bismuth. One of these polyvalent metal elements can be used singly, or two or more of these polyvalent metal elements can be used in combination.

In the case where the catalyst layer satisfies the condition (1), the content of the polyvalent metal element in the catalyst layer is preferably 2 to 20 mol%, more preferably 3.5 to 15 mol%, and particularly preferably 4 to 12 mol%, based on the total content of metal elements in the catalyst layer. By setting the content of the polyvalent metal element in the catalyst layer to fall within the above-described range, the specific electric conductivity can be enhanced more and the durability of the catalyst layer can further be improved. Note that when the content of the polyvalent metal element in the catalyst layer is excessively small, the effects obtained by allowing the catalyst layer to contain the polyvalent metal element may be somewhat insufficient in some cases. On the other hand, when the content of the polyvalent metal element in the catalyst layer is excessively large, the contents of ruthenium which is an active element and tin which is a binder element relatively decrease, and therefore the catalytic activity may be somewhat insufficient in some cases. Note that the types and contents of the metal elements in each layer including the catalyst layer can be measured and calculated by an analysis method such as X-ray fluorescent (XRF) spectroscopy.

In the case where the catalyst layer satisfies the condition (1), the content of ruthenium in the catalyst layer is preferably 20 to 70 mol%, more preferably 25 to 66 mol%, and particularly preferably 30 to 55 mol%, based on the total content of metal elements in the catalyst layer. By setting the content of ruthenium in the catalyst layer to fall within the above-described range, higher catalytic activity can be obtained. Note that when the content of ruthenium in the catalyst layer is excessively small, the catalytic activity may be somewhat deficient in some cases. On the other hand, when the content of ruthenium in the catalyst layer is excessively large, aggregation of the ruthenium component is likely to occur. In addition, with respect to the amount of coating, the proportion of ruthenium which does not contribute effectively to electrolysis reaction increases and the proportion of the binder component decreases, and thereby the durability may be lowered in some cases.

### [Condition (2)]

The catalyst layer contains ruthenium (Ru) and tin (Sn), and has a content of ruthenium of 40 mol% or more based on the total content of ruthenium and tin. That is, the catalyst layer is formed with a mixed metal oxide which is a composite oxide of ruthenium as an active element and tin as a binder element. Note that the catalyst layer is preferably formed with a mixed metal oxide which is a composite oxide containing substantially only ruthenium and tin as metal as metal elements. Then, by setting the content of ruthenium to 40 mol% or more, preferably 43 mol% or more, and more preferably 45 mol% or more, based on the total content of ruthenium and tin, the specific electric conductivity can be enhanced and an oxygen generation electrode having a lower electrode potential can be made. Further, by setting the content of ruthenium to the above-described range, the catalyst components (particularly, ruthenium which is an active element) is unlikely to be consumed and a catalyst layer having excellent durability can be made even when electrolysis is performed under an acidic condition, such as a sulfuric acid acidic condition.

### [Additional Metal Element]

A metal element other than ruthenium and tin (additional metal element) can further be contained in the catalyst layer. By allowing the catalyst layer to further contain an additional metal element, the additional metal element can act as a quasi-active component to electrolysis reaction. Examples of the additional metal element include manganese (Mn). That is, the catalyst layer preferably further contains manganese.

In the case where the additional metal element is contained in the catalyst layer, the content of the additional metal element in the catalyst layer is usually 10 to 50 mol%, preferably 20 to 40 mol%, based on the total content of metal elements in the catalyst layer.

### (Intermediate Layer)

Figure 2 is a schematic diagram showing another embodiment of the oxygen generation electrode of the present invention. An oxygen generation electrode 20 shown in Figure 2 is further provided with an intermediate layer 6 disposed between the substrate 2 and the catalyst layer 4. Providing such an intermediate layer between the substrate and the catalyst layer is preferable because thereby passivation of the substrate made of titanium or a titanium alloy caused by electrolysis can be suppressed and the substrate can be protected from corrosion. Thereby, an oxygen generation electrode which has further improved durability and enables longer-term electrolysis can be made.

The intermediate layer can be formed with various metals. Examples of the metal for forming the intermediate layer include titanium (Ti), tantalum (Ta), tin (Sn), and alloys thereof, and mixed oxides thereof. Among others, the intermediate layer is preferably formed with an alloy of titanium and tantalum, or a mixed oxide of titanium and tantalum. The thickness of the intermediate layer is not particularly limited and can arbitrarily be set. The thickness of the intermediate layer may be set to, for example, 0.2 to 5 µm.

### (Barrier Layer)

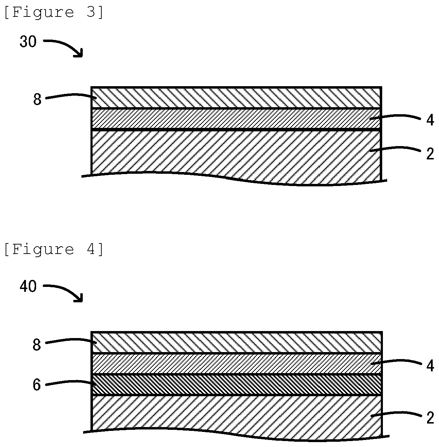

Each of Figures 3 and 4 is a schematic diagram of yet another embodiment of the oxygen generation electrode of the present invention. An oxygen generation electrode 30 shown in Figure 3 is provided with the substrate 2 and the catalyst layer 4 disposed on the substrate 2, and is further provided a barrier layer 8 disposed on the catalyst layer 4. In addition, an oxygen generation electrode 40 shown in Figure 4 is provided with the substrate 2 and the catalyst layer 4 disposed on the substrate 2, and is further provided with the intermediate layer 6 disposed between the substrate 2 and the catalyst layer 4 and the barrier layer 8 disposed on the catalyst layer 4. That is, both of the oxygen generation electrodes 30, 40 shown in Figures 3 and 4 are further provided with the barrier layer 8 disposed on the catalyst layer 4. Providing such a barrier layer (top coat layer) on the catalyst layer is preferable because thereby consumption of the components such as ruthenium in the catalyst layer can be reduced. In addition, diffusion of the components such as arsenic (As), antimony (Sb), and manganese (Mn), which are present in the electrolyte and may be deposited by electrolysis, to the surface of the catalyst layer can be suppressed. Thereby, an oxygen generation electrode which has further improved durability and enables longer-term electrolysis can be made.

The barrier layer can be formed with, for example, the same one as the composite oxide of a plurality of metal elements, which is a mixed metal oxide for forming the catalyst layer. That is, the barrier layer can be formed with the above-described mixed metal oxide which is a composite oxide of a plurality of polyvalent metal elements, such as bismuth in addition to ruthenium and tin. The content of the active metal element, such as ruthenium, in the barrier layer is preferably 0.5 to 5% based on the total content of the metal elements in the barrier layer. In addition, the content of the binder element, such as tin, in the barrier layer is preferably 95 to 99.5 mol% based on the total content of the metal elements in the barrier layer.

The thickness of the barrier layer is not particularly limited and can arbitrarily be set. The thickness of the barrier layer may be set to, for example, 0.5 to 5 µm.

### (Applications of Oxygen Generation Electrode)

The oxygen generation electrode of the present invention has a high specific electric conductivity, and has durability suitable for long-term electrolysis because ruthenium in the catalyst layer is unlikely to be consumed even when an acidic electrolyte, such as a sulfuric acid acidic electrolyte, is electrolyzed. Therefore, the oxygen generation electrode of the present invention is useful as, for example, an anode for an electrowinning process for a nonferrous metal (anode for electrowinning) to be used in combination with a cathode for electrowinning of a nonferrous metal. Further, the oxygen generation electrode of the present invention is useful as an oxygen generation electrode to be used for an electrolytic process in which the density of a current to be applied is 10 A/m² or less.

### (Method for Producing Oxygen Generation Electrode)

The oxygen generation electrode of the present invention can be produced by forming the catalyst layer containing a mixed metal oxide on the substrate. To form the catalyst layer on the substrate, a coating layer is formed by, for example, preparing a coating liquid containing metals, metal salts, or the like at a desired ratio and applying the prepared coating liquid on the surface of the substrate on which a surface treatment such as a blast treatment or an etching treatment has been performed as necessary. Subsequently, calcination is performed under a proper temperature condition, and thereby the catalyst layer containing a mixed metal oxide is formed on the substrate, and thus an intended oxygen generation electrode can be obtained. Note that by repeating the application of the coating liquid and the calcination, the thickness and metal element contents of the catalyst layer to be formed can be controlled. The calcination temperature may be set to usually 450 to 550°C, preferably 480 to 520°C.

The intermediate layer can also be formed on the substrate before forming the catalyst layer. To form the intermediate layer on the substrate, a coating layer is first formed by applying a coating liquid containing metals, metal salts, or the like at a desired ratio on the surface of the substrate in the same manner as in forming the above-described catalyst layer. Subsequently, calcination is performed under a proper temperature condition, and thereby the intermediate layer can be formed on the substrate. By repeating the application of the coating liquid and the calcination, the thickness and metal element contents of the intermediate layer to be formed can be controlled. The calcination temperature may be set to usually 450 to 550°C, preferably 480 to 520°C. The catalyst layer can be formed on the formed intermediate layer according to the above-described procedure.

In addition, with regard to the intermediate layer, a desired intermediate layer can also be formed on the substrate by an ion plating method, a sputtering method, a plasma spraying method, or the like.

To form the barrier layer on the catalyst layer, a coating layer is first formed by applying a coating liquid containing metals, metal salts, or the like on the surface of the catalyst layer in the same manner as in forming the above-described catalyst layer. Subsequently, calcination is performed under a proper temperature condition, and thereby the barrier layer can be formed on the catalyst layer. By repeating the application of the coating liquid and the calcination, the thickness and metal element contents of the barrier layer to be formed can be controlled. The calcination temperature may be set to usually 450 to 550°C, preferably 480 to 520°C.

### Examples

Hereinafter, the present invention will be described specifically based on Examples, but the present invention is not limited to these Examples. Note that "parts" and "%" in Examples and Comparative Examples are each on a mass basis unless otherwise noticed.

### <Pre-treatment of Substrate>

A titanium mesh substrate of 100 mm × 100 mm × 1 mm was prepared. This mesh substrate was annealed at 590°C for 60 minutes in an air atmosphere, and then a blast treatment was performed thereon using alumina (#60). The blast-treated mesh substrate was immersed in 20% boiling hydrochloric acid to perform an etching treatment for 12 minutes and was then rinsed with ion-exchanged water and dried to obtain a pre-treated substrate.

### <Formation of Intermediate Layer>

### (Method (A))

The pre-treated substrate was set in an arc ion plating apparatus using a Ta-Ti alloy target as an evaporation source. Then, an intermediate layer composed of a Ta-Ti alloy was formed on the surface of the substrate according to the coating conditions shown in Table 1.

**Table 1**

| Target (evaporation source) | Disk (with back side cooled with water) made of alloy of Ta:Ti = 60:40 (mass ratio) |
|---|---|
| Ultimate vacuum pressure (×10⁻²Pa) | ≤1.5 |
| Substrate temperature (°C) | ≤500 |
| Coating pressure (×10⁻¹Pa) | 3.0 to 4.0 |
| Power supplied to evaporation source | 29 to 30 V, 140 to 160 A |
| Coating time (min) | 15 to 20 |
| Coating thickness (in terms of increased mass: µm) | 2 |

### (Method (B))

A coating liquid of Ti:Ta =50:50 (molar ratio) was prepared by mixing 270 g/L of a TiCl₄ solution, 125 g/L of a TaCl₅ solution, and a 10% aqueous hydrochloric acid solution. The prepared coating liquid was applied on the surface of the pre-treated substrate with a brush and then dried at 60°C for 10 minutes. Calcination was performed in an electric muffle furnace at 520°C for 10 minutes in an air atmosphere, and then air-cooling was performed to room temperature. The cycle from the application of the coating liquid to the air-cooling was repeated until the coating amount reached 1.3 g/m² (in terms of mass of metals), and thus an intermediate layer composed of a mixed oxide of Ta-Ti was formed on the surface of the substrate.

### <Production of Oxygen Generation Electrode>

### (Example 1)

### [Formation of Catalyst Layer]

A 1.65 mol/L tin (Sn) hydroxyacetochloride complex (SnHAC) solution was prepared according to the procedure described in International Patent Publication No. WO 2005/014885. A 0.9 mol/L ruthenium (Rn) hydroxyacetochloride (RuHAC) solution was prepared according to the procedure described in International Patent Publication No. WO 2010/055065. An 80 g/L Bi solution was prepared by dissolving BiCl₃ in a 10% aqueous hydrochloric acid solution. A 130 g/L Mn solution was prepared by dissolving Mn (NO₃)₂·6H₂O in a 10% aqueous acetic acid solution. The RuHAC solution, the Mn solution, the SnHAC solution, the Bi solution, and the 10% aqueous acetic acid solution were mixed to prepare a coating liquid of Ru:Mn:Sn:Bi = 33:20:43:4 (molar ratio). The prepared coating liquid was applied with a brush on the intermediate layer of the substrate having the intermediate layer formed by the above-described method (A) on the surface thereof and then dried at 60°C for 10 minutes. Calcination was performed in an electric muffle furnace at 520°C for 10 minutes in an air atmosphere, and then air-cooling was performed to room temperature. The cycle from the application of the coating liquid to the air-cooling was repeated until the coating amount reached 10 g/m² (in terms of mass of Ru and Mn) to form a catalyst layer on the intermediate layer.

### [Formation of Barrier Layer]

The RuHAC solution, the SnHAC solution, the Bi solution, and the 10% aqueous acetic acid solution were mixed to prepare a coating liquid of Sn:Bi:Ru = 95:2:3 (molar ratio). The prepared coating liquid was applied on the catalyst layer with a brush and then dried at 60°C for 10 minutes. Calcination was performed in an electric muffle furnace at 520°C for 10 minutes in an air atmosphere, and then air-cooling was performed to room temperature. The cycle from the application of the coating liquid to the air-cooling was repeated until the coating amount reached 3 g/m² (in terms of mass of Sn) to form a barrier layer on the catalyst layer, and thus an oxygen generation electrode was obtained.

### (Examples 2 to 11 and Comparative Examples 1 to 3)

Oxygen generation electrodes were produced in the same manner as in Example 1 described above except that the respective materials were used in such a way as to make the layer structures as shown in Table 2 and calcination and the like were performed under conditions shown in Table 2. Note that post-bake was performed in the electric muffle furnace by retaining the temperature at 520°C for 1 hour in an air atmosphere after forming each catalyst layer. In addition, the tantalum (Ta) source, lanthanum (La) source, niobium (Nb) source, and iridium (Ir) source used in the coating liquids for forming the catalyst layers are as follows.
- Tantalum (Ta) source: 125 g/L TaCls solution
- Lanthanum (La) source: La(NO₃)₃·6H₂O
- Niobium (Nb) source: ammonium niobate (V) oxalate hydrate
- Iridium (Ir) source: 20.5% chloroiridic acid solution

**Table 2**

| | Intermediate layer | | Catalyst layer | | | | | | | | Barrier layer | | | |
|---|---|---|---|---|---|---|---|---|---|---|---|---|---|---|
| | Comp | Meth | Calcination | | Post-bake | | Comp (molar ratio) | Coating amount (g/m²) | | | Calcination | | Comp (molar ratio) | Coating amount Sn (g/m²) |
| | | | Temp (°C) | Time (min) | Temp (°C) | Time (h) | | Ru | Mn | Ir | Temp (°C) | Time (min) | | |
| Ex. 1 | Ta-Ti | (A) | 520 | 10 | - | - | Ru:Mn:Sn:Bi =33:20:43:4 | 10 | | - | 520 | 10 | Sn:Bi:Ru =95:2:3 | 3 |
| Ex.2 | Ta-Ti | (A) | 480 | 10 | 520 | 1 | Ru:Sn:Bi =48:47:5 | 10 | - | - | - | - | - | - |
| Ex. 3 | Ta-Ti | (A) | 480 | 10 | - | - | Ru:Sn =50:50 | 10 | - | - | - | - | - | - |
| Ex.4 | Ta-Ti | (A) | 480 | 10 | 520 | 1 | Ru:Sn:Bi =25:70:5 | 10 | - | - | - | - | - | - |
| Ex. 5 | Ta-Ti | (A) | 480 | 10 | 520 | 1 | Ru:Sn:Bi =66:29:5 | 10 | - | - | - | - | - | - |
| Ex.6 | - | - | 480 | 10 | 520 | 1 | Ru:Sn:Bi =48:47:5 | 10 | - | - | - | - | - | - |
| Ex. 7 | Ta-Ti | (B) | 480 | 10 | 520 | 1 | Ru:Sn:Bi =48:47:5 | 10 | - | - | - | - | - | - |
| Ex.8 | - | - | 480 | 10 | 520 | 1 | Ru:Sn:Ta = 47:47 :6 | 10 | - | - | - | - | - | - |
| Ex . 9 | - | - | 480 | 10 | 520 | 1 | Ru:Sn:La = 47:47 : 6 | 10 | - | - | - | - | - | - |
| Ex . 10 | - | - | 480 | 10 | 520 | 1 | Ru:Sn:Nb =45:45:10 | 10 | - | - | - | - | - | - |
| Ex. 11 | - | - | 480 | 10 | 520 | 1 | Ru:Sn:Mo =45:45:10 | 10 | - | - | - | - | - | - |
| C. Ex. 1 | Ta-Ti | (A) | 360 | 10 | - | - | Ru:Ta =80:20 | 8 | - | - | - | - | - | - |
| C.Ex.2 | Ta-Ti | (A) | 480 | 10 | - | - | Ru:Ta =80:20 | 8 | - | - | - | - | - | - |
| C.Ex.3 | Ta-Ti | (A) | 520 | 10 | - | - | Ir:Ta =64:34 | - | - | 8 | - | - | - | - |

| | | | | | | | | | | | | | | |
|---|---|---|---|---|---|---|---|---|---|---|---|---|---|---|
| Meanings of abbreviations in the table are as follows. Ex.: Example, C.Ex.: Comparative Example, Comp: Composition, Meth: Method, Temp: Temperature | | | | | | | | | | | | | | |

### <Evaluation>

### (Measurement of Electrode Potential)

The electrode potential (V) under an oxygen generation condition was measured for the produced oxygen generation electrodes by the method described below. Results are shown in Table 3.
- Current breaking method
- Electrolyte: 150 g/L aqueous sulfuric acid solution
- Temperature of electrolyte: 50°C
- Area of action electrode: 10 mm × 10 mm
- Counter electrode: Zr plate (20 mm × 70 mm)
- Reference electrode: Mercurous sulfate (Hg/Hg₂SO₄)

**Table 3**

| | Electrode potential (current density:300A/m²) (V vs. Hg/Hg₂SO₄) |
|---|---|
| Example 1 | 0.817 |
| Example 2 | 0.817 |
| Example 3 | 0.819 |
| Example 4 | 0.815 |
| Example 5 | 0.825 |
| Example 6 | 0.808 |
| Example 7 | 0.800 |
| Example 8 | 0.833 |
| Example 9 | 0.796 |
| Example 10 | 0.834 |
| Example 11 | 0.785 |
| Comparative Example 1 | 0.849 |
| Comparative Example 2 | 0.875 |
| Comparative Example 3 | 0.932 |

### (Durability Test)

A durability test was performed for each oxygen generation electrode (catalyst layer) according to the conditions described below.
- Electrolyte: 150 g/L aqueous sulfuric acid solution
- Temperature of electrolyte: 40°C
- Area of anode: 20 mm × 50 mm
- Cathode: Zr plate (30 mm × 70 mm)
- Density of current applied to anode: 300 A/m²

The residual coating amount after the elapse of a fixed time was measured by XRF spectroscopy to calculate the consumption (g/m²) of active metal elements (Ru, Mn, Ir). In addition, the consumption rates (mg/m²/h) of the active metal elements (Ru, Mn, Ir) were calculated from the calculated consumption and the electrolysis time. Results are shown in Table 4.

**Table 4**

| | Consumption (g-Ru/m²) | Electrolysis time (h) | Consumption rate (mg-Ru/m²/h) |
|---|---|---|---|
| Example 1 | 0.7 | 4,000 | 0.17 |
| Example 2 | 0.6 | 2,500 | 0.25 |
| Example 3 | 0.5 | 1,000 | 0.52 |
| Example 4 | 0.5 | 1,000 | 0.47 |
| Example 5 | 1.0 | 1,000 | 0.99 |
| Example 6 | 0.8 | 1,000 | 0.79 |
| Example 7 | 0.7 | 1,000 | 0.66 |
| Example 8 | 0.7 | 1,000 | 0.72 |
| Example 9 | 1.3 | 1,000 | 1.3 |
| Example 10 | 0.9 | 1,000 | 0.86 |
| Example 11 | 1.1 | 1,000 | 1.0 |
| Comparative Example 1 | 7.6 | 500 | 15 |
| Comparative Example 2 | 2.0 | 1,000 | 2.0 |
| Comparative Example 3 | - | - | - |

### Industrial Applicability

The oxygen generation anode of the present invention is useful as an anode for an electrowinning process for a nonferrous metal or as an oxygen generation electrode to be used for an electrolytic process in which the density of a current to be applied is 10 A/m² or less.

### Reference Signs List

- 10, 20, 30, 40: Oxygen generation electrode
- 2: Substrate
- 4: Catalyst layer
- 6: Intermediate layer
- 8: Barrier layer

## Claims

1. An oxygen generation electrode comprising:
a substrate formed with titanium or a titanium alloy; and
a catalyst layer disposed on the substrate and formed with a mixed metal oxide, wherein
the catalyst layer satisfies at least any one of the following condition (1) and condition (2):
condition (1): comprising ruthenium, tin, and a trivalent or higher polyvalent metal element excluding a tetravalent metal element; and
condition (2): comprising ruthenium and tin, and having a content or ruthenium of 40 mol% or more based on a total content of ruthenium and tin.

2. The oxygen generation electrode according to claim 1, wherein
the catalyst layer satisfies the condition (1), and
a content of the polyvalent metal element in the catalyst layer is 2 to 20 mol% based on a total content of metal elements in the catalyst layer.

3. The oxygen generation electrode according to claim 1 or 2, wherein the polyvalent metal element is at least one selected from the group consisting of bismuth, tantalum, lanthanum, niobium, and molybdenum.

4. The oxygen generation electrode according to any one of claims 1 to 3, wherein
the catalyst layer satisfies the condition (1), and
a content of ruthenium in the catalyst layer is 20 to 70 mol% based on a total content of metal elements in the catalyst layer.

5. The oxygen generation electrode according to any one of claims 1 to 4, wherein the catalyst layer further comprises manganese.

6. The oxygen generation electrode according to any one of claims 1 to 5, further comprising an intermediate layer disposed between the substrate and the catalyst layer.

7. The oxygen generation electrode according to any one of claims 1 to 6, further comprising a barrier layer disposed on the catalyst layer.

8. The oxygen generation electrode according to any one of claims 1 to 7, to be used as an anode for an electrowinning process for a nonferrous metal.
